# EUROPEAN PATENT APPLICATION

(11) **EP 4 746 250 A1**
(43) Date of publication of application: **20.05.2026**
(21) Application number: 25187947.4
(22) Date of filing: 07.07.2025
(51) Int. Cl.: H02K 1/14, H02K 7/14, H02K 5/12

(54) **STATOR ASSEMBLY, COMPRESSOR MOTOR, COMPRESSOR AND REFRIGERATOR**

(30) Priority: 18.11.2024 CN 202411647719
(71) Applicant: Huangshi Donper Compressor Co., Ltd., Huangshi, Hubei 435000 (CN)
(72) Inventor: YANG, Baichang, Huangshi City, 435000 (CN); ZHU, Yushan, Huangshi City, 435000 (CN); Haddad Kalluf, Flavio Jorge, Huangshi City, 435000 (CN); YUAN, Qingqing, Huangshi City, 435000 (CN); LIANG, Mancang, Huangshi City, 435000 (CN); HUANG, He, Huangshi City, 435000 (CN)
(74) Representative: Valet Patent Services Limited

(57) **Abstract**

The present application relates to the technical field of compression equipment, and particularly to a stator assembly, a compressor motor, a compressor and a refrigerator, including a stator core and stator winding packs, wherein the stator core has an annular structure, and the space inside the annular structure is used to install the rotor; there are multiple stator winding packs, and the multiple stator winding packs are arranged in sequence in the circumferential direction of the annular structure to form an arc arrangement path, and a winding pack gap is formed between the two ends of the arc arrangement path; the winding pack gap is used to arrange the compressor cylinder seat, so that the compressor cylinder seat can be close to the end surface of the stator core at the winding pack gap. The present application can effectively reduce the distance between the compressor cylinder seat and the stator core by improving the stator assembly, thereby reducing the height of the entire compressor.

## Description

### TECHNICAL FIELD

The present application relates to the technical field of compression equipment, and particularly to a stator assembly, a compressor motor, a compressor and a refrigerator.

### BACKGROUND ART

The permanent magnet synchronous motors used in the variable frequency refrigerator compressors on the market are mostly three-phase concentrated winding structures, and the stator winding on the stator core are evenly distributed around the central axis to form a complete annular winding arrangement structure around the rotor. When designing the compressor cylinder seat, it is necessary to raise the cylinder seat relative to the stator core to avoid the structure of the stator winding pack being higher than the stator core, thereby causing an increase in the overall height of the compressor. For refrigerator manufacturers, the increase in the height of the compressor means that a larger cabin is needed. When the volume of the entire refrigerator remains unchanged, it can only occupy the capacities of the refrigeration and freezing compartments, resulting in a limited capacity of the refrigerator.

### SUMMARY

The purpose of the present application is to provide a stator assembly, a compressor motor, a compressor and a refrigerator, which can effectively reduce the distance between the compressor cylinder seat and the stator core by improving the stator assembly, thereby reducing the height of the entire compressor.

The embodiments of the present application are implemented as follows.

In a first aspect, an embodiment of the present application provides a stator assembly, including a stator core and at least one stator winding pack; the stator core is provided with an annular structure, and the space inside the annular structure is used to install a rotor; multiple stator winding packs are provided, and the multiple stator winding packs are sequentially arranged in the circumferential direction of the annular structure to form at least one arc arrangement path, and a winding pack gap is formed between two adjacent ends of the at least one arc arrangement path; the winding pack gap is used to arrange a compressor cylinder seat, so that the compressor cylinder seat can be close to the end surface of the stator core at the winding pack gap.

As an optional embodiment, the stator core is provided with multiple through slots arranged at intervals in the circumferential direction of the rotor, the through slots extend in the axial direction of the annular structure, and stator teeth are formed between adjacent through slots; each of the stator winding packs passes through two adjacent through slots and is wound around the stator tooth.

As an optional implementation, the number of the stator teeth is consistent with the number of the stator winding packs.

As an optional implementation, a support platform is provided at the winding pack gap of the stator core; the support platform has an effective support surface that fits with the compressor cylinder seat; and the effective support surface is perpendicular to the axial direction of the rotor.

As an optional implementation, a side of the support platform facing away from the rotor is provided with an avoidance groove, and an extending direction of the avoidance groove is consistent with the axial direction of the rotor.

As an optional implementation, two winding pack gaps symmetrically arranged about the rotor are provided, and two compressor cylinder seats whose installation positions respectively correspond one-to-one to the positions of the two winding pack gaps.

In a second aspect, an embodiment of the present application provides a compressor motor, including the above-mentioned stator assembly, a compressor cylinder seat and a rotor; the rotor is installed inside the annular structure of the stator assembly; the compressor cylinder seat is arranged at one end of the stator assembly, and the compressor cylinder seat is close to the end surface of the stator core at the winding pack gap.

As an optional implementation, the compressor cylinder seat is provided with at least one first connecting portion; the stator core is provided with at least one second connecting portion, and the at least one first connecting portion and the at least one second connecting portion are connected via at least one locking part.

As an optional implementation, multiple first connecting portions are provided and arranged at intervals around the axis of the rotor; the number of second connecting portions is consistent with that of the first connecting portions and the second connection portions are connected with and correspond one-to-one to the first connecting portions.

In a third aspect, an embodiment of the present application provides a compressor, including an external protective shell and the above-mentioned compressor motor arranged in the external protective shell; a cylinder is arranged on the compressor cylinder seat, a piston is arranged in the cylinder, the piston is provided with a crankshaft connecting rod connected to a rotor, and the rotor drives the piston to move back and forth in the cylinder through the crankshaft connecting rod.

In a fourth aspect, an embodiment of the present application further provides a refrigerator, including the above-mentioned compressor and a compartment for storing objects.

The beneficial effects of the embodiments of the present application include the follows.

A stator assembly provided in an embodiment of the present application includes a stator core and stator winding packs; the stator core of the embodiment of the present application is provided with an annular structure, and the space inside the annular structure is used to install the rotor. There are multiple stator winding packs in the embodiment of the present application and the multiple stator winding packs are sequentially arranged in the circumferential direction of the annular structure to form an arc arrangement path, and a winding pack gap is formed between the two ends of the arc arrangement path. In the embodiment of the present application, a compressor cylinder seat is arranged at the winding pack gap, so that the compressor cylinder seat can be close to the end surface of the stator core at the winding pack gap. Compared with the prior art, the stator winding packs of the embodiment of the present application are not arranged in a complete annular path around the rotor to form a winding pack gap, so that the compressor cylinder seat can be as close to the stator core as possible, thereby eliminating the distance between the compressor cylinder seat and the end surface of the stator core and further enabling reduced size of the compressor in the axial direction of the rotor.

The embodiment of the present application provides a compressor motor, including the above-mentioned stator assembly, a compressor cylinder seat and a rotor; the rotor of the embodiment of the present application is installed in the annular structure of the stator assembly; the compressor cylinder seat of the embodiment of the present application is arranged at one end of the stator assembly, and the compressor cylinder seat is close to the end surface of the stator core at the winding pack gap. The compressor motor provided by the embodiment of the present application adopts the above-mentioned stator assembly, which enables the compressor cylinder seat to be as close to the stator core as possible, thereby eliminating the distance between the compressor cylinder seat and the end surface of the stator core and further enabling reduced size of the compressor in the axial direction of the rotor.

The embodiment of the present application provides a compressor, including an external protective shell and the above-mentioned compressor motor arranged in the outer protective shell; a cylinder is arranged on the compressor cylinder seat, a piston is arranged in the cylinder, the piston is provided with a crankshaft connecting rod connected to a rotor, and the rotor drives the piston to move back and forth in the cylinder through the crankshaft connecting rod. The compressor provided in the embodiment of the present application adopts the above-mentioned compressor motor, and the overall height of the compressor can be reduced, so that the capacities of the refrigeration and freezing compartments may not be occupied, enabling a larger capacity of the refrigerator.

The embodiment of the present application also provides a refrigerator, including the above-mentioned compressor and a compartment for storing objects. The refrigerator provided by the embodiment of the present application adopts the above-mentioned compressor. Compared with the prior art, the above compressor has the advantage of small volume, which is conducive to increasing the capacities of the refrigeration compartment and freezing compartment of the refrigerator.

### BRIEF DESCRIPTION OF DRAWINGS

In order to more clearly illustrate the technical solutions of the embodiments of the present application, the drawings required for use in the embodiments will be briefly introduced below. It should be understood that the following drawings only show some embodiments of the present application and therefore should not be regarded as limiting the scope. For a person ordinarily skilled in the art, other related drawings may be obtained based on these drawings without paying creative work.
FIG. 1 is a first structural schematic diagram of a stator assembly according to embodiments of the present application;
FIG. 2 is a second structural schematic diagram of the stator assembly according to embodiments of the present application;
FIG. 3 is a third structural schematic diagram of the stator assembly according to embodiments of the present application;
FIG. 4 is a fourth structural schematic diagram of the stator assembly according to embodiments of the present application;
FIG. 5 is a fifth structural schematic diagram of the stator assembly according to embodiments of the present application;
FIG. 6 is a sixth structural schematic diagram of the stator assembly according to embodiments of the present application;
FIG. 7 is a structural schematic diagram of a compressor according to embodiments of the present application;
FIG. 8 is a first structure schematic diagram of a stator assembly in the prior art; and
FIG. 9 is a second structural schematic diagram of the stator assembly in the prior art.

### Reference numerals:

100- stator core; 101- stator winding pack; 102- annular structure; 103- winding pack gap; 104- compressor cylinder seat; 105- through slot; 106- stator tooth; 107- support platform; 108- effective support surface; 109- avoidance groove; 110- rotor; 111- first connecting portion; 112- second connecting portion; 113- external protective shell; 114- compressor motor; 115-cylinder; 116- piston; 117- crankshaft connecting rod.

### DETAILED DESCRIPTION OF EMBODIMENTS

In order to make the purposes, technical solutions and advantages of the embodiments of the present application clearer, the technical solutions in the embodiments of the present application will be clearly and completely described below in conjunction with the drawings in the embodiments of the present application. Obviously, the described embodiments are some of the embodiments of the present application, rather than all the embodiments. The components of the embodiments of the present application described and shown in the drawings here may be arranged and designed in various different configurations.

Therefore, the following detailed description of the embodiments of the present application provided in the drawings is not intended to limit the scope of the present application for which protection is sought, but merely represents selected embodiments of the present application. Based on the embodiments in the present application, all other embodiments obtained by a person ordinarily skilled in the art without creative work are within the scope of protection of the present application.

It should be noted that similar reference numerals and letters represent similar items in the following drawings, so once an item is defined in one drawing, it does not need to be further defined and explained in the subsequent drawings. In addition, the terms "first", "second", "third", etc. are only used to distinguish the description and cannot be understood as indicating or implying importance in relativity.

In the description of the present application, it should also be noted that, unless otherwise clearly specified and limited, the terms "provide", "install", "link", and "connect" should be understood in a broad sense, for example, it may be a fixed connection, a detachable connection, or an integral connection; it may be a mechanical connection or an electrical connection; it may be a direct connection, or may be indirect connection through an intermediate medium, or it may be the internal communication of two elements. For a person ordinarily skilled in the art, the specific meanings of the above terms in the present application may be understood according to specific circumstances.

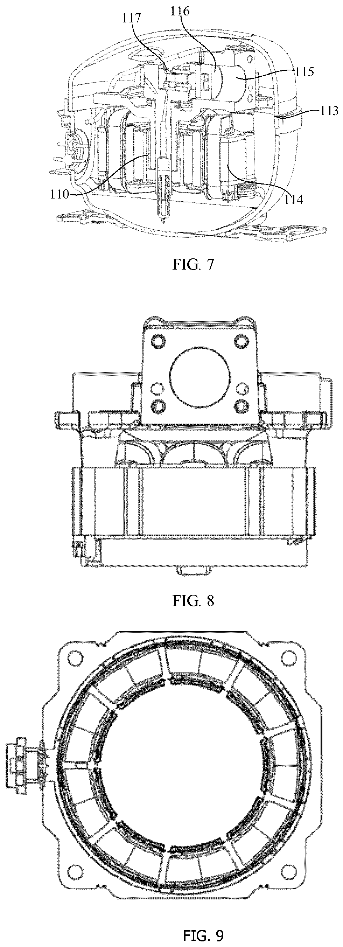

The permanent magnet synchronous motors used in the variable frequency refrigerator compressors on the market are mostly three-phase concentrated winding structures. As shown in FIG. 8 and FIG. 9, the stator winding packs on the stator core are evenly distributed around the central axis to form a complete annular coil arrangement structure around the rotor. When designing the compressor cylinder seat, it is necessary to raise the cylinder seat relative to the stator core to avoid the structure of the stator winding pack which is higher than the stator core, thereby causing an increase in the overall height of the compressor. For refrigerator manufacturers, the increase in the height of the compressor means that a larger cabin is needed. When the volume of the entire refrigerator remains unchanged, it can only occupy the capacities of the refrigeration and freezing compartments, resulting in a limited capacity of the refrigerator.

In order to solve the above technical problems, the embodiments of the present application provide a stator assembly, a compressor motor 114, a compressor and a refrigerator.

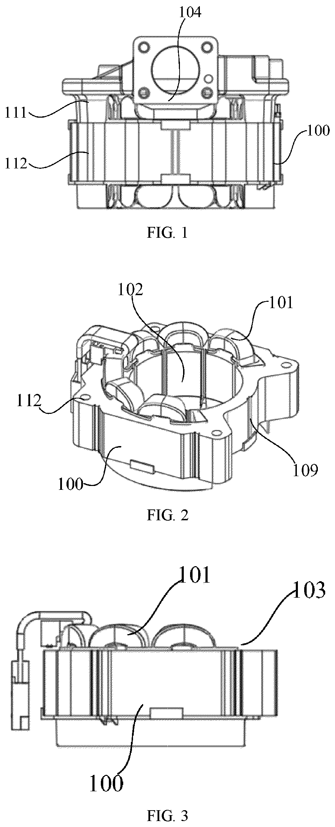

Referring to FIG. 1, FIG. 2 and FIG. 3, embodiments of the present application provide a stator assembly, including a stator core 100 and stator winding packs 101, where the stator core 100 has an annular structure 102, the space inside the annular structure 102 is used to install a rotor 110, there are multiple stator winding packs 101, the multiple stator winding packs 101 are sequentially arranged in the circumferential direction of the annular structure 102 to form an arc arrangement path, and a winding pack gap 103 is formed between the two ends of the arc arrangement path; the winding pack gap 103 is used to arrange a compressor cylinder seat 104, so that the compressor cylinder seat 104 can be close to the end surface of the stator core 100 at the winding pack gap 103.

It should be noted that the compressor cylinder seat 104 is arranged at the upper end of the stator core 100.

The stator winding packs 101 of the embodiment of the present application are sequentially arranged in the circumferential direction of the rotor 110. The arc arrangement path of the stator winding packs 101 does not form a complete ring shape. A winding pack gap 103 is formed at a position corresponding to the compressor cylinder seat 104 to prevent the height of the stator winding pack 101 from blocking the compressor cylinder seat 104 from being close to the stator core 100.

It should be noted that the compressor cylinder seat 104 forms a projection on the stator core 100 in the axial direction of the rotor 110, and the projection falls in the winding pack gap 103.

Regarding the explanation of the winding pack gap 103, the position of the winding pack gap 103 corresponds to the compressor cylinder seat 104 in the axial direction of the rotor 110. The opening spacing of the winding pack gap 103 is slightly greater than or equal to the size of the compressor cylinder seat 104 in the circumferential direction of the rotor 110. It should be noted that the stator assembly of the embodiment of the present application is essentially a structure of the circumferential specific part of the rotor 110 where no stator coils are provided, eliminating the obstruction of the stator winding packs 101 to the compressor cylinder seat 104 and components such as the piston 116 and the connecting rod and enabling the compressor cylinder seat 104 to be as close to the stator core 100 as possible.

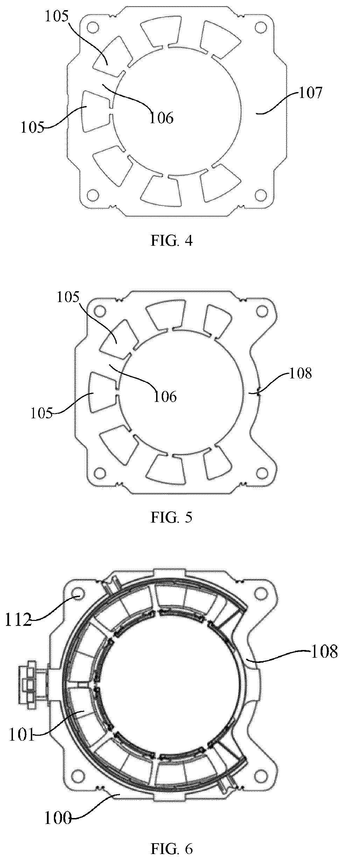

Referring to FIG. 6 and FIG. 9, regarding the number of stator winding packs 101, in the prior art, the stator core 100 is typically provided with 9 sequentially arranged stator winding packs 101. In the embodiment of the present application, 6 sequentially arranged stator winding packs 101 may be arranged to form the winding pack gap 103.

It should be noted that those skilled in the art can design the number of stator winding packs 101 as required, which is not particularly limited.

A stator assembly provided in an embodiment of the present application includes a stator core 100 and stator winding packs 101; the stator core 100 in the embodiment of the present application has an annular structure 102, and the space inside the annular structure 102 is used to install a rotor 110. There are multiple stator winding packs 101 in the embodiment of the present application, and the multiple stator winding packs 101 are arranged sequentially in the circumferential direction of the annular structure 102 to form an arc arrangement path, and a winding pack gap 103 is formed between the two ends of the arc arrangement path.

In the embodiment of the present application, the compressor cylinder seat 104 is arranged at the winding pack gap 103 so that the compressor cylinder seat 104 can be close to the end surface of the stator core 100 at the winding pack gap 103.

It should be noted that the compressor cylinder seat 104 can be directly fitted with the end surface of the stator core 100, which can minimize the height of the compressor cylinder seat 104 to the greatest extent. Of course, a certain gap may be provided between the compressor cylinder seat 104 and the surface of the stator core 100 as required. It should be noted that as long as the gap is smaller than the size of the portion of the stator winding pack 101 protruding from the stator core 100, the effect of reducing the height of the compressor can be achieved.

Compared with the prior art, the stator winding pack 101 of the embodiment of the present application is not arranged in a complete annular path around the rotor 110, forming a winding pack gap 103, so that the compressor cylinder seat 104 can be as close to the stator core 100 as possible, thereby eliminating the distance between the compressor cylinder seat 104 and the end surface of the stator core 100 and enabling reduced size of the compressor in the axial direction of the rotor 110.

Referring to FIG. 4 and FIG. 5, as an optional implementation, the stator core 100 is provided with multiple through slots 105 arranged at intervals in the circumferential direction of the rotor 110, the through slots 105 extend in the axial direction of the annular structure 102, and a stator tooth 106 are formed between each adjacent through slots 105; the stator winding pack 101 passes through two adjacent through slots 105 and is wound around the stator tooth 106.

It should be noted that the number of stator teeth 106 may be greater than the number of stator winding packs 101. For example, there are 9 stator teeth 106 and 6 stator winding packs 101, and the winding pack gap 103 is formed at the position of 3 stator teeth 106 not covered by the stator winding packs 101.

Preferably, the number of stator teeth 106 is consistent with the number of stator winding packs 101.

Exemplarily, six stator winding packs 101 are correspondingly sleeved over six stator teeth 106. At this time, the space at the winding pack gap 103 may accommodate three stator winding packs 101, but the stator winding packs 101 are not provided. A circle around the rotor 110 is 360 degrees. At this time, the center angle corresponding to one stator winding pack 101 or one stator tooth 106 is 40 degrees, that is, the stator winding packs 101 are continuously arranged 240 degrees in the circumferential direction, and the center angle corresponding to the winding pack gap 103 is 120 degrees.

Exemplarily, 9 stator winding pack 101 are correspondingly sleeved over 9 stator teeth 106. At this time, the space at the winding pack gap 103 may accommodate three stator winding packs 101, but the stator winding packs 101 are not provided. A circle around the rotor 110 is 360 degrees. At this time, the center angle corresponding to one stator winding pack 101 or one stator tooth 106 is 30 degrees, that is, the stator winding packs 101 are continuously arranged 270 degrees in the circumferential direction, and the center angle corresponding to the winding pack gap 103 is 90 degrees.

Referring to FIG. 4 and FIG. 5, as an optional implementation, the stator core 100 is provided with a support platform 107 at the winding pack gap 103; the support platform 107 has an effective support surface 108 that fits with the compressor cylinder seat 104; and the effective support surface 108 is perpendicular to the axial direction of the rotor 110.

Preferably, the embodiment of the present application enables the compressor cylinder seat 104 to be directly attached to and contact the stator core 100, so that the position of the compressor cylinder seat 104 is lowered to the greatest extent.

As an optional implementation, a side of the support platform 107 facing away from the rotor 110 is provided with an avoidance groove 109, and an extending direction of the avoidance groove 109 is consistent with the axial direction of the rotor 110.

Further, in the embodiment of the present application, the arrangement of the avoidance groove 109 can not only enable arrangement of other structures on the one hand, but also reduce the weight of the stator core 100 on the other hand, which is beneficial to achieving a lightweight design.

As shown in FIG. 7, an embodiment of the present application provides a compressor motor 114, including the above-mentioned stator assembly, compressor cylinder seat 104 and rotor 110; the rotor 110 of the embodiment of the present application is installed inside the annular structure 102 of the stator assembly; the compressor cylinder seat 104 of the embodiment of the present application is arranged at one end of the stator assembly, and the compressor cylinder seat 104 is close to the end surface of the stator core 100 at the winding pack gap 103.

The compressor motor 114 provided in the embodiment of the present application adopts the above-mentioned stator assembly, which enables the compressor cylinder seat 104 to be as close to the stator core 100 as possible, thereby eliminating the distance between the compressor cylinder seat 104 and the end surface of the stator core 100 and enabling reduced size of the compressor in the axial direction of the rotor 110.

Further, referring to FIG. 1 and FIG. 2, the compressor cylinder seat 104 is provided with first connecting portions 111; the stator core 100 is provided with second connecting portions 112, and the first connecting portion 111 and the second connecting portion 112 are connected via a locking part.

In the above, there are multiple first connecting portions 111 which are arranged at intervals around the axis of the rotor 110; the number of the second connecting portions 112 is consistent with that of the first connecting portions 111 and they are connected in a one-to-one correspondence.

It should be noted that there may be 4 first connecting portions 111 which are arranged uniformly at intervals in the circumferential direction of the rotor 110. A stable connection may be achieved through the first connecting portions 111 and the second connecting portions 112.

As shown in FIG. 7, an embodiment of the present application provides a compressor, including an external protective shell 113 and the above-mentioned compressor motor 114 arranged inside the external protective shell 113; a cylinder 115 is arranged on the compressor cylinder seat 104, a piston 116 is arranged in the cylinder 115, and the piston 116 is provided with a crankshaft connecting rod 117 connected to the rotor 110. The rotor 110 drives the piston 116 to move back and forth in the cylinder 115 through the crankshaft connecting rod 117.

As an optional implementation, there are two winding pack gaps 103 symmetrically arranged about the rotor 110, and there are two compressor cylinder seats 104 whose installation positions correspond one-to-one to the positions of the two winding pack gaps 103.

Further, the embodiment of the present application has two symmetrical winding pack gaps 103, and each winding pack gap 103 may correspond to one compressor cylinder seat 104. It should be noted that each of the two compressor cylinder seats 104 is provided therein with a cylinder 115 to form a double-cylinder structure. Pistons 116 are respectively provided in the two cylinders 115, and a set of crankshaft connecting rods 117 connected to the rotor 110 is arranged on the pistons 116 to realize linkage (synchronized movement) of the two pistons 116. The arrangement of the two cylinders 115 can increase the capacity of the cylinder 115, which is beneficial to enhancing the power of the compressor.

The compressor provided in the embodiment of the present application adopts the above-mentioned compressor motor 114, and the overall height of the compressor can be reduced, so it does not occupy the capacities of the refrigeration and freezing compartments, so that the refrigerator can have a larger capacity.

In addition, an embodiment of the present application further provides a refrigerator, including the above-mentioned compressor and a compartment for storing objects.

The refrigerator provided in the embodiment of the present application adopts the above-mentioned compressor. Compared with the prior art, the above-mentioned compressor has the advantage of small volume, which is conducive to increasing the capacities of the refrigeration compartment and freezing compartment of the refrigerator.

The above are only the preferred embodiments of the present application and not intended to limit the present application. For those skilled in the art, the present application may have various modifications and variations. Any modification, equivalent replacement, improvement, etc. made within the spirit and principle of the present application shall be included in the protection scope of the present application.

## Claims

1. A stator assembly, **characterized by** comprising a stator core (100) and at least one stator winding pack (101), wherein the stator core (100) is provided with an annular structure (102), and a space inside the annular structure (102) is configured to install a rotor (110); multiple stator winding packs (101) are provided, and the multiple stator winding packs (101) are sequentially arranged in a circumferential direction of the annular structure (102) to form at least one arc arrangement path, and a winding pack gap (103) is formed between two adjacent ends of the at least one arc arrangement path; the winding pack gap (103) is configured to arrange a compressor cylinder seat (104), so that the compressor cylinder seat (104) can be close to an end surface of the stator core (100) at the winding pack gap (103).

2. The stator assembly according to claim 1, wherein the stator core (100) is provided with multiple through slots (105) arranged at intervals in a circumferential direction of the rotor (110), the through slots (105) extend in an axial direction of the annular structure (102), and each adjacent through slots (105) are provided therebetween with a stator tooth (106); and each of the stator winding packs (101) passes through corresponding two adjacent through slots (105) and is wound around the corresponding stator tooth (106).

3. The stator assembly according to claim 2, wherein number of the stator teeth (106) is consistent with number of the stator winding packs (101).

4. The stator assembly according to any one of claims 1 to 3, wherein a support platform (107) is provided at the winding pack gap (103) of the stator core (100); the support platform (107) has an effective support surface (108) that fits with the compressor cylinder seat (104); and the effective support surface (108) is perpendicular to an axial direction of the rotor (110).

5. The stator assembly according to claim 4, wherein a side of the support platform (107) facing away from the rotor (110) is provided with an avoidance groove (109), and an extension direction of the avoidance groove (109) is consistent with the axial direction of the rotor (110).

6. The stator assembly according to any one of claims 1 to 5, wherein two winding pack gaps (103) arranged symmetrically about the rotor (110) are provided, and two compressor cylinder seats (104) are provided and have installation positions corresponding one-to-one to positions of the two winding pack gaps (103).

7. A compressor motor (114), comprising the stator assembly according to any one of claims 1 to 6, a compressor cylinder seat (104) and a rotor (110), wherein the rotor (110) is installed inside the annular structure (102) of the stator assembly, the compressor cylinder seat (104) is arranged at one end of the stator assembly, and the compressor cylinder seat (104) is close to an end surface of the stator core (100) at the winding pack gap (103).

8. The compressor motor (114) according to claim 7, wherein the compressor cylinder seat (104) is provided with at least one first connecting portion (111); the stator core (100) is provided with at least one second connecting portion (112); and the at least one first connecting portion (111) and the at least one second connecting portion (112) are connected via at least one locking part.

9. The compressor motor (114) according to claim 8, wherein multiple first connecting portions (111) are provided and arranged at intervals around an axis of the rotor (110); number of second connecting portions (112) is consistent with number of the first connecting portions (111), and the second connecting portions and the first connecting portions are connected in one-to-one correspondence.

10. A compressor, comprising an external protective shell (113) and the compressor motor (114) according to any one of claims 7 to 9 provided in the external protective shell (113), wherein a cylinder (115) is provided on the compressor cylinder seat (104), a piston (116) is provided in the cylinder (115), the piston (116) is provided with a crankshaft connecting rod (117) connected to a rotor (110), and the rotor (110) is configured to drive the piston (116) to move back and forth in the cylinder (115) through the crankshaft connecting rod (117).

11. A refrigerator, comprising the compressor according to claim 10, and a compartment configured for storing objects.
